# EUROPEAN PATENT APPLICATION

(11) **EP 3 962 199 A1**
(43) Date of publication of application: **02.03.2022**
(21) Application number: 19926459.9
(22) Date of filing: 26.04.2019
(51) Int. Cl.: H04W 72/04, H04W 16/14, H04W 52/02

(54) **USER TERMINAL AND WIRELESS COMMUNICATION METHOD**

(71) Applicant: NTT DOCOMO, INC., Chiyoda-Ku Tokyo 100-6150 (JP)
(72) Inventor: HARADA, Hiroki, Tokyo 100-6150 (JP); MURAYAMA, Daisuke, Tokyo 100-6150 (JP); KURITA, Daisuke, Tokyo 100-6150 (JP)
(74) Representative: Hoffmann Eitle
(86) International application number: PCT/JP2019/018119
(87) International publication number: WO 2020/217513

(57) **Abstract**

A user terminal includes a receiving section that monitors a first downlink control channel on the basis of a search space configuration for a frequency band in which channel sensing is applied, and a control section that changes the search space configuration on the basis of a result of detection of the first downlink control channel. According to one aspect of the present disclosure, it is possible to perform appropriate communication in an unlicensed band.

## Description

### Technical Field

The present disclosure relates to a user terminal and a radio communication method in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G plus (+)," "New Radio (NR)," "3GPP Rel. 15 (or later versions)," and so on) are also under study.

In an existing LTE system (e.g., Rel. 8 to Rel. 12), specifications have been conducted based on an assumption that the system is exclusively operated in a frequency band (referred to as a licensed band, a licensed carrier, a licensed component carrier (licensed CC), and so on) licensed to a communication carrier (operator). For example, 800 MHz, 1.7 GHz, 2 GHz, and the like are used as the licensed CC.

In existing LTE systems (e.g., Rel. 13), in order to expand a frequency band, use of a frequency band different from the above-described licensed band (also referred to as an unlicensed band, an unlicensed carrier, an unlicensed CC) is supported. The unlicensed band is assumed to be, for example, a 2.4 GHz band, a 5 GHz band, and the like in which Wi-Fi (registered trademark) and Bluetooth (registered trademark) can be used.

Specifically, in Rel. 13, carrier aggregation (CA) that aggregates a carrier (CC) in the licensed band with a carrier (CC) in the unlicensed band is supported. Communication thus performed by using the unlicensed band together with the licensed band is referred to as License-Assisted Access (LAA).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (e.g., 5G, 5G+, NR, and Rel. 15 (or later versions)), a transmitting apparatus (which is, for example, a base station in a downlink (DL), and is, for example, a user terminal in an uplink (UL)) performs listening (also referred to as Listen Before Talk (LBT), Clear Channel Assessment (CCA), a carrier sense, channel sensing, channel access procedure, or the like) to check the presence or absence of transmission by another apparatus (e.g., a base station, a user terminal, a Wi-Fi apparatus, or the like) before transmission of data in an unlicensed band.

It is conceivable that such radio communication systems are in accordance with regulation or requirement in the unlicensed band in order to coexist with another system in the unlicensed band.

However, unless an operation in the unlicensed band is definitely determined, an appropriate communication in the unlicensed band may be unavailable, such as an operation non-compliant with the regulation under certain communication conditions, reduction in utilization efficiency of radio resources, and the like.

Thus, an object of the present disclosure is to provide a user terminal and a radio communication method that perform appropriate communication in an unlicensed band.

### Solution to Problem

A user terminal according to an aspect of the present disclosure includes a receiving section that monitors a first downlink control channel on the basis of a search space configuration for a frequency band in which channel sensing is applied, and a control section that changes the search space configuration on the basis of a result of detection of the first downlink control channel.

### Advantageous Effects of Invention

According to one aspect of the present disclosure, it is possible to perform appropriate communication in an unlicensed band.

### Brief Description of Drawings

FIG. 1 is a diagram to show an example of a first method of downlink transmission;
FIG. 2 is a diagram to show an example of a second method of downlink transmission;
FIG. 3 is a diagram to show an example of dynamic PDCCH monitoring;
FIG. 4 is a diagram to show an example of PDCCH monitoring that uses two SS configurations;
FIG. 5 is a diagram to show an example of PDCCH monitoring that uses three SS configurations;
FIG. 6 is a diagram to show an example of a schematic structure of a radio communication system according to one embodiment;
FIG. 7 is a diagram to show an example of a structure of a base station according to one embodiment;
FIG. 8 is a diagram to show an example of a structure of a user terminal according to one embodiment; and
FIG. 9 is a diagram to show an example of a hardware structure of the base station and the user terminal according to one embodiment.

### Description of Embodiments

### <Unlicensed Band>

In an unlicensed band (e.g., a 2.4 GHz band or a 5 GHz band), for example, it is assumed that a plurality of systems, such as a Wi-Fi system, a system to support LAA (LAA system), and the like, coexists, and thus it is conceivable that collision avoidance and/or interference control of transmission between the plurality of the systems are necessary.

For example, in the Wi-Fi system that uses the unlicensed band, Carrier Sense Multiple Access (CSMA)/Collision Avoidance (CA) are employed for the purpose of the collision avoidance and/or interference control. In CSMA/CA, a certain duration "Distributed access Inter Frame Space (DIFS)" is set before transmission, and a transmitting apparatus performs data transmission after checking the absence of another transmission signal (carrier sense). After the data transmission, the transmitting apparatus waits for ACKnowledgement (ACK) from a receiving apparatus. When the ACK is failed to be received within the certain duration, the transmitting apparatus judges that a collision has occurred, and performs retransmission.

In LAA of existing LTE systems (e.g., Rel. 13), an apparatus for data transmission performs LBT to check the presence or absence of transmission by another apparatus (e.g., a base station, a user terminal, a Wi-Fi apparatus, or the like) before transmission of data in an unlicensed band.

The apparatus for the transmission may be, for example, a base station (e.g., a gNB (gNodeB)) in downlink (DL), and may be, for example, a user terminal (e.g., User Equipment (UE)) in uplink (UL). A receiving apparatus for receiving data from the apparatus for the transmission may be, for example, a user terminal in a DL, and may be, for example, a base station in a UL.

In LAA of the existing LTE systems, the apparatus for the transmission starts data transmission after a certain period (e.g., a period immediately after or a backoff period) from detection of the absence (idle state) of transmission by another apparatus in LBT.

The following four categories are defined as channel access methods in LTE LAA.
- Category 1: a node transmits without performing LBT.
- Category 2: the node performs a carrier sense at a fixed sensing time before transmission, and then transmits when a channel is empty.
- Category 3: the node randomly generates a value (random backoff) from a certain range before transmission, then repetitively performs a carrier sense at a fixed sensing slot time, and then transmits when the channel empty through slots with the value can be checked.
- Category 4: the node randomly generates a value (random backoff) from a certain range before transmission, then repetitively performs a carrier sense at a fixed sensing slot time, and then transmits when the channel empty through slots with the value can be checked. The node varies a range of the random backoff value (contention window size) depending on a condition of communication failure due to a collision with communication by another system.

For LBT regulation, performing LBT depending on a length of a gap (non-transmission period, period in which received power is a certain threshold value or less, and the like) between two transmissions is under study.

An NR system that uses an unlicensed band may be referred to as an NR-Unlicensed (U) system, an NR LAA system, and so on. There is a possibility that dual connectivity (DC) between a licensed band and an unlicensed band, stand-alone (SA) for an unlicensed band, and the like are also employed in the NR-U.

In the NR-U, a base station (e.g., gNB) or a UE obtains transmission opportunity (TxOP) when an LBT result is idle, and performs transmission. The base station or the UE does not perform transmission when the LBT result is busy (LBT-busy). The time of the transmission opportunity is referred to as Channel Occupancy Time (COT).

The NR-U that uses a signal including at least Synchronization Signal (SS)/Physical Broadcast CHannel (PBCH) block (SS block (SSB)) is under study. With respect to an unlicensed band operation using this signal, the following things are under study.
- no gap within a time range in which the signal is transmitted in at least one beam,
- an occupied bandwidth to be filled,
- minimizing the time of channel occupancy by the signal, and
- a characteristic that eases quick channel access.

A signal including a Channel State Information (CSI)-Reference Signal (RS), an SSB burst set (a set of SSBs), and a control resource set (COntrol REsource SET (CORESET)) and a PDSCH associated with an SSB in one continuous burst signal is under study. This signal may be referred to as a discovery reference signal (DRS, NR-U DRS, and so on).

The CORESET associated with the SSB may be referred to as a Remaining Minimum System Information (RMSI)-CORESET, CORESET #0, and so on. The RMSI may be referred to as System Information Block 1 (SIB1). The PDSCH associated with the SSB may be a PDSCH to carry the RMSI (RMSI PDSCH), or may be a PDSCH scheduled using a PDCCH (DCI having a CRC scrambled by a System Information (SI)-Radio Network Temporary Identifier (RNTI)) in the RMSI-CORESET.

The SSB having a different SSB index may be transmitted using a different beam (transmit beam of the base station). The SSB, and the RMSI PDCCH and RMSI PDSCH corresponding to the SSB may be transmitted using the same beam.

A node (e.g., the base station, UE) in the NR-U coexists with another system or another operator, and thus starts transmission after checking that the channel is empty (idle) in LBT.

After succeeding in LBT, the node may continue transmitting in a certain period from the start of the transmission. Note, however, that when the transmission is interrupted for a certain gap period or more in the middle of the transmission, there is a possibility that another system uses the channel, and thus another LBT is necessary before the next transmission. The available continuous transmission period depends on a priority class in a used LBT category or LBT. The priority class may be a contention window size for a random backoff and the like. The shorter an LBT period is (the higher the priority class is), the shorter the available continuous transmission period is.

The node needs to transmit in a wide band in accordance with regulation of transmission bandwidth in an unlicensed band. For example, the regulation of the transmission bandwidth in Europe is 80 % or more of a system bandwidth. There is a possibility that transmission in a narrow band collides without being detected by another system or another operator that performs LBT in the wide band.

It is preferable that the node transmit in as short a time as possible. Each of a plurality of coexisting systems shortens a channel occupancy time, and thus the plurality of the systems can share resources efficiently.

It is preferable that the base station in the NR-U transmit a different beam (beam index, SSB index) SSB, RMSI PDCCH (PDCCH for RMSI PDSCH scheduling) associated with the SSB, and RMSI PDSCH by using as wide a band as possible in as short a time as possible. Therefore, the base station can apply a high priority class (LBT category with a short LBT period) to SSB/RMSI (DRS) transmission, and thus success in LBT with high probability can be expected. The base station transmits in a wide band, thereby easing fulfilment of the regulation of the transmission bandwidth. The base station also transmits in a short time, thereby avoiding interrupted transmission.

A bandwidth (UE channel bandwidth) of an initial downlink (DL) bandwidth part (BWP) for the NR-U being 20 MHz is under study. This is because a channel bandwidth for Wi-Fi that is a coexisting system is 20 MHz. In this case, the SSB, RMSI PDCCH, and RMSI PDSCH need to be within a 20 MHz bandwidth.

In the NR-U DRS, there is no gap in a period of transmission of at least one beam, thereby allowing interruption by another system in the period of the transmission to be prevented.

The NR-U DRS may be cyclically transmitted regardless of whether the UE in an active state and the UE in an idle state exist. Therefore, the base station can cyclically perform transmission of a signal necessary for channel access procedure by using easy LBT, and thus the UE can quickly access a cell of the NR-U.

The NR-U DRS limits the necessary number of channel accesses, and puts the signal in a short time in order to achieve a short channel occupancy time. The NR-U DRS may support the NR-U for stand-alone (SA).

### <Wide-band Operation>

For both a downlink (DL) and an uplink (UL), a bandwidth wider than 20 MHz may be supported in a plurality of serving cells. For the NR-U, supporting a configuration of the bandwidth wider than 20 MHz for a serving cell is under study.

For DL operation, the following options for bandwidth part (BWP)-based operations in a carrier having the bandwidth wider than 20 MHz are under study.
- Option 1a: a plurality of BWPs are configured, then the plurality of the BWPs are activated, and then the PDSCH is transmitted on one or more BWPs.
- Option 1b: a plurality of BWPs are configured, then the plurality of the BWPs are activated, and then the PDSCH is transmitted on a single BWP.
- Option 2: a plurality of BWPs are configured, then a single BWP is activated, and then when Clear Channel Assessment (CCA) of the whole of the BWP in the base station is successful, the PDSCH is transmitted on the BWP.
- Option 3: a plurality of BWPs are configured, then a single BWP is activated, and then the PDSCH is transmitted on a part of the BWP in which CCA in the base station is successful.

Here, the CCA may assess for each 20 MHz band.

The UE may assume the existence of a signal, such as a DMRS in a PDCCH or group common (GC)-PDCCH for detection of a transmission burst from a serving base station. The PDCCH may be a PDCCH for one UE (UE specific PDCCH, regular PDCCH). The GC-PDCCH may be a PDCCH common to one or more UEs (UE-group common PDCCH).

In an unlicensed band, there are cases where a transmission burst is not periodically transmitted by LBT, and thus blind decoding (blind detection) for power reduction in the UE and detection of the transmission burst need not be necessary. Firstly, the UE performs DMRS detection, and may perform blind decoding when detecting a DMRS. Such two steps blind decoding using the DMRS detection need not be essential for the UE.

The options 2 and 3 of the above-described options that use a single active BWP have a less impact on specifications, just like Rel. 15 NR.

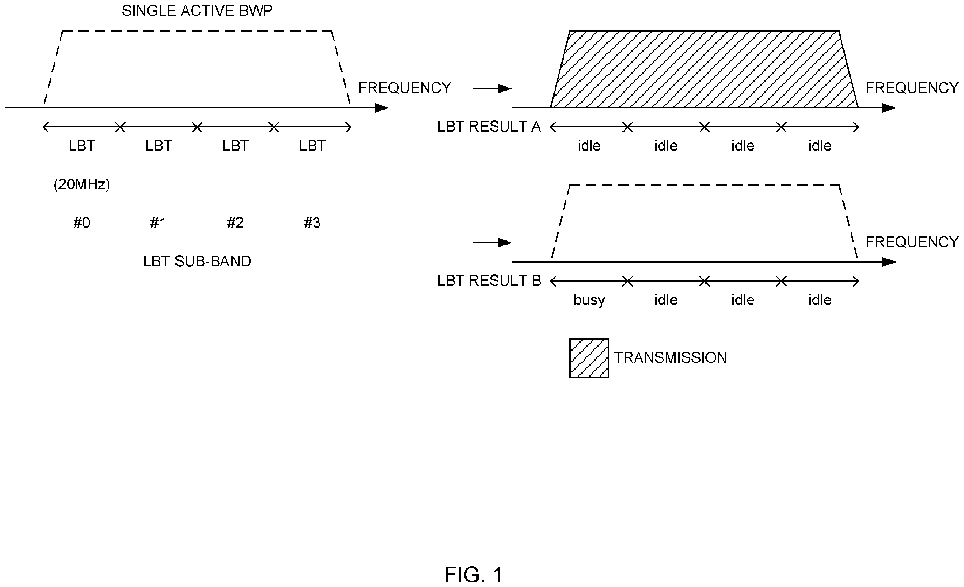

As shown in FIG. 1 (transmission spectra), when a single active BWP has four LBT sub-bands and the option 2 (first method of downlink transmission) is employed, the base station performs LBT in each of the four LBT sub-bands, and then when all of LBT results are idle (successful) (LBT result A), transmission in the active BWP can be performed. When an LBT result in any one of the sub-bands is busy (unsuccessful) (LBT result B), the base station does not perform transmission in the active BWP.

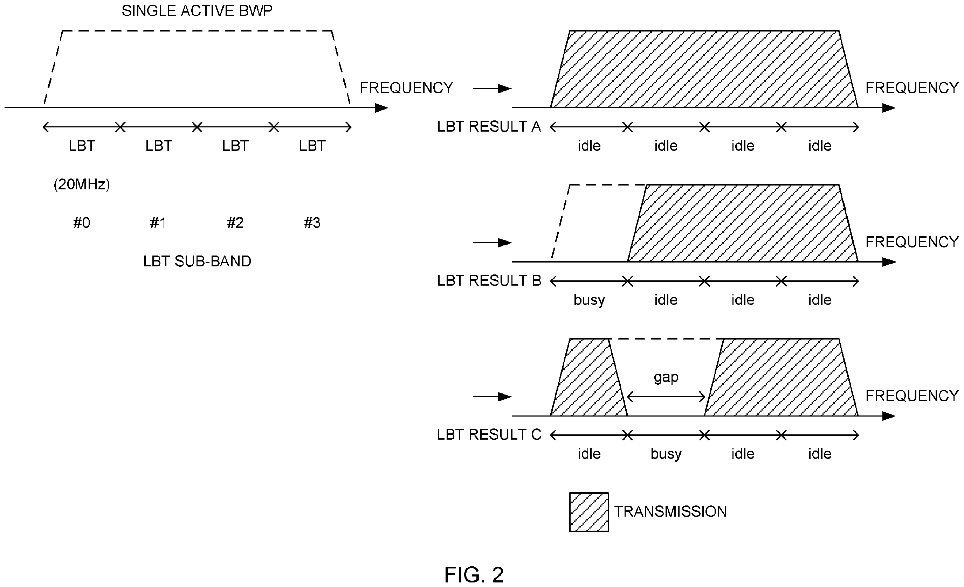

As shown in FIG. 2 (transmission spectra), when a single active BWP has four sub-bands and the option 3 (second method of downlink transmission) is employed, the base station performs LBT in each of the four sub-bands, and then when all of LBT results are idle, transmission in the active BWP can be performed. When an LBT result in any one of the sub-bands is busy, the base station can perform transmission in a sub-band other than the sub-band. Here, assume that the single active BWP includes four continuous sub-bands #0, #1, #2, and #3. When LBT results in all of sub-bands #0 to #3 are idle (LBT result A), the base station can perform transmission in continuous sub-bands #0 to #3. When only an LBT result in sub-band #0 is busy (LBT result B), the base station can perform transmission in continuous sub-bands #1, #2, and #3. When only an LBT result in sub-band #1 is busy (LBT result C), the base station can perform transmission in sub-bands #0, #2, and #3. A band between sub-bands #0 and #2 is a gap, and an available band for the transmission is discontinuous.

The LBT sub-bands may have a certain bandwidth. The certain bandwidth may be one of bandwidths defined for coexisting systems. For example, the certain bandwidth may be 20 MHz.

### <PDCCH Monitoring in NR-U>

In the NR-U, the base station (e.g., gNB) can perform transmission in a specific period from success in LBT, and thus may not always perform DL transmission in the serving cell.

Even though the base station starts transmission immediately after succeeding in LBT, unless the UE performs PDCCH monitoring at that timing, the UE cannot acknowledge the transmission, and thus it is conceivable that the UE performs PDCCH monitoring with fine time granularity. Increasing frequency of PDCCH monitoring by the UE increases power consumption of the UE. Note that using a plurality of PDCCH monitoring occasions in one slot in Rel. 15 is optional function.

Thus, the UE that monitors a reference signal, such as a DMRS, that can be monitored with lower power consumption, with finer time granularity than a slot until DL transmission in the serving cell starts, instead of monitoring the PDCCH, that judges that DL transmission in the serving cell has started when detecting the reference signal, and that performs PDCCH monitoring with finer time granularity than the slot through the next slot boundary is under study (dynamic PDCCH monitoring).

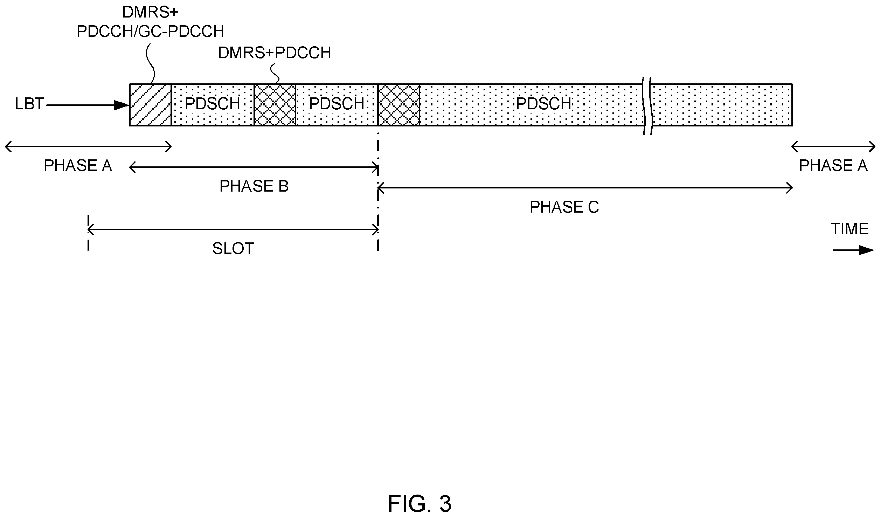

As shown in FIG. 3, the dynamic PDCCH monitoring may be constituted by the following three monitoring phases.
- Phase A: no PDCCH monitoring,
- Phase B: mini-slot PDCCH monitoring, and
- Phase C: regular slot PDCCH monitoring.

The mini-slot may be a period (certain number of symbols) shorter than the slot.

The dynamic PDCCH monitoring can reduce a load to the UE in PDCCH monitoring for an NR-U serving cell.

Phase A is a state in which a transmission burst from the base station is not transmitted, for example, outside COT of the base station. In phase A, the UE may not monitor the PDCCH, and may monitor a DMRS for the GC-PDCCH. The UE may determine transition from phase A to phase B by detecting the transmission burst having the DMRS for the GC-PDCCH from the serving base station. In a case where the assumed number of DMRSs is small, a DMRS monitoring load to the UE can be suppressed.

Phase B may be within a period of a slot in which the DMRS for the GC-PDCCH is detected. In this phase, the UE may monitor a DMRS for the PDCCH at starts of all of mini-slots through the next slot boundary. The UE can acknowledge a time length (duration) of phase B.

In phase B, in other words, in the first slot for the transmission burst, it is conceivable that a PDCCH transmission timing varies depending on a timing of success in LBT and after the PDCCH and a PDSCH with a certain length are transmitted, the PDCCH and the PDSCH are further transmitted at the remaining symbols, and thus it is preferable that a plurality of PDCCH monitoring occasions be configured.

After phase B, the UE switches the monitoring phase to phase C to monitor the PDCCH in accordance with the same search space configuration as that for Rel. 15 NR.

In phase C, in other words, in a slot behind the first slot out of the transmission burst, the same scheduling as that in NR frequency may be performed. For example, in a use case of eMBB, the PDCCH may be arranged at the head of each slot.

This operation enables channel access to be started immediately after success in LBT, and thus an increase in power consumption of the UE due to PDCCH monitoring can be suppressed.

In LTE-LAA, the head of DL transmission is a subframe (1 ms) or slot (0.5 ms) boundary. The head of DL transmission always includes a cell-specific reference signal (CRS). The PDCCH is mapped to the whole of a component carrier (CC) band. For example, a common PDCCH may notify the UE of information (e.g., the presence or absence of the transmission, how many symbols the transmission is present at, and the like) about transmission in a subframe for the PDCCH and the next subframe, or may not notify the UE of the information. Transmission of the common PDCCH is not essential.

The UE performs blind detection of the CRS at a slot cycle, and when detecting the CRS, the UE may perform blind detection of the PDCCH or common PDCCH, or may perform blind detection of the CRS and PDCCH at the slot cycle from the beginning.

For the NR-U, allowing anything other than the slot boundary as the head of DL transmission is under study. When the UE continues monitoring the PDCCH and DMRS with finer granularity than the slot, power consumption of the UE becomes high.

Supposing that LBT is performed for each LBT sub-band (e.g., 20 MHz), a CC or BWP bandwidth wider than a LBT sub-band width can be configured. In this case, LBT is performed in a plurality of LBT sub-bands, and there is a possibility that a band for the head of the transmission burst differs depending on which LBT sub-bands LBT has been successful in. It is conceivable that the UE performs monitoring in each LBT sub-band.

Thus, the inventors of the present invention came up with the idea of a method for suppressing an increase in power consumption of the UE due to PDCCH monitoring, as well as shortening a time from success in LBT until channel access.

Narrowing signals to be monitored with fine granularity is preferable. It is preferable that monitoring at the head of the transmission burst be performed for each LBT sub-band and monitoring in a slot behind the first slot for the transmission burst be performed in a band in which LBT has been successful.

Embodiments according to the present disclosure will be described in detail hereinafter with reference to the drawings. The radio communication methods according to respective embodiments may each be employed individually, or may be employed in combination.

In the present disclosure, Listen Before Talk (LBT), listening, Clear Channel Assessment (CCA), a carrier sense, channel sensing, sensing, channel access procedure, and shared spectrum channel access may be interchangeably interpreted.

In the present disclosure, frequency, a band, a spectrum, a carrier, a component carrier (CC), and a cell may be interchangeably interpreted.

In the present disclosure, NR-U frequency, NR-U target frequency, an NR-U band, a shared spectrum, an unlicensed band, an unlicensed spectrum, an LAA SCell, an LAA cell, a primary cell (Primary Cell (PCell), Primary Secondary Cell (PSCell), Special Cell (SpCell)), a secondary cell (SCell), and a frequency band in which channel sensing is applied may be interchangeably interpreted.

In the present disclosure, NR frequency, NR target frequency, a licensed band, a licensed spectrum, a PCell, a PSCell, an SpCell, an SCell, non-NR-U frequency, Rel. 15, NR, and a frequency band in which channel sensing is not applied may be interchangeably interpreted.

Different frame structures may be used between the NR-U frequency and NR frequency.

A radio communication system (NR-U, LAA system) may be in compliance with a first radio communication standard (e.g., NR, LTE, and the like) (or may support the first radio communication standard).

Another system (coexisting system, coexisting apparatus) that coexists with this radio communication system and another radio communication apparatus (coexisting apparatus) may be in compliance with a second radio communication standard, such as Wi-Fi, Bluetooth (registered trademark), WiGig (registered trademark), Wireless LAN (Local Area Network), IEEE802.11, and LPWA (Low Power Wide Area), different from the first radio communication standard (or may support the second radio communication standard). The coexisting system may be a system that receives interference from the radio communication system, or may be a system that gives interference to the radio communication system.

In the present disclosure, a transmission burst, a DL transmission burst, the first DL transmission in COT, and DL transmission from a base station may be interchangeably interpreted.

In the present disclosure, at least one of a PDCCH and a GC-PDCCH may be referred to as a specific PDCCH, a PDCCH, and so on. A DMRS for at least one of the PDCCH and the GC-PDCCH may be referred to as a DMRS for a PDCCH, a DMRS, and so on.

In the present disclosure, an LBT sub-band, an LBT band, an active DL, a part of a BWP, a sub-band, and a partial band may be interchangeably interpreted.

In the present disclosure, monitoring, blind detection, blind decoding, and an attempt to detect may be interchangeably interpreted.

### (Radio Communication Method)

### <First Embodiment>

A plurality of search space (SS) configurations each having a plurality of different pieces of PDCCH monitoring periodicity may be configured for a UE. The UE may determine whether or not to use a specific SS configuration out of the plurality of the SS configurations on the basis of a result of detection of a specific PDCCH (may change the specific SS configuration or may switch the specific SS configuration). The specific PDCCH may be at least one of a GC-PDCCH and a PDCCH. The specific SS configuration may be an SS configuration used for phase A.

Phase A may be at least one of a period until detection (before detection) of the specific PDCCH, a period after notification of interruption of a transmission burst from a serving base station by the detected specific PDCCH, a period after a timing of an end of the transmission burst notified by the detected specific PDCCH, and a period in which DL transmission from the serving base station is not detected through a certain time.

Phase B may be within from detection of the specific PDCCH until the first slot boundary.

Phase C may be at and after the first slot boundary after the detection of the specific PDCCH.

Two SS configurations (e.g., SSs #1 and #2) for detection of the transmission burst may be configured for the UE. SSs #1 and #2 may be a UE-specific search space (USS). SS #1 may be a default USS, or may be an SS used for phases A and B, and monitoring periodicity in SS #1 may be shorter than a slot length. SS #2 may be an SS used for phase C, and monitoring periodicity in SS #2 may be equal to the slot length.

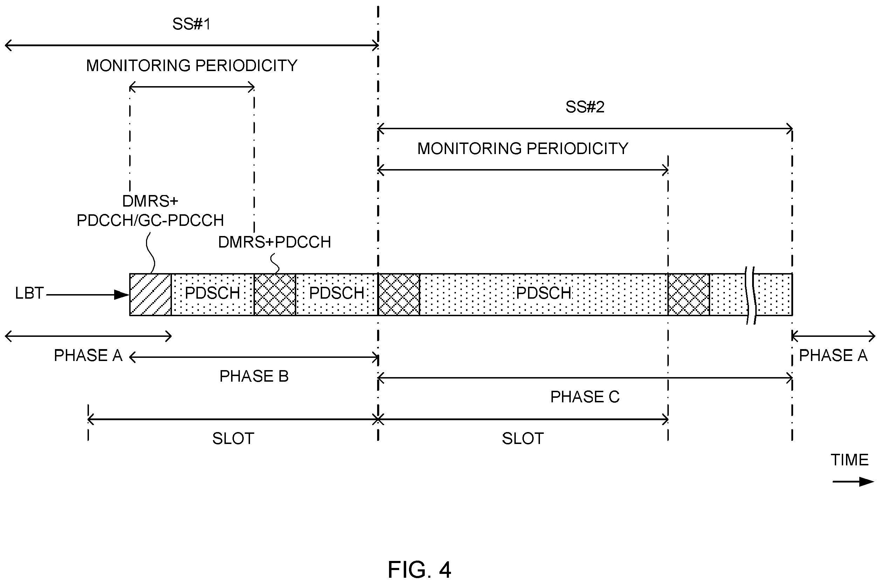

FIG. 4 is a diagram to show an example of PDCCH monitoring that uses the two SS configurations.

In phases A and B, the UE may monitor SS #1, and need not monitor SS #2.

In phase C, the UE may monitor SS #2, and need not monitor SS #1.

Three SS configurations (e.g., SSs #0, #1, and #2) for detection of the transmission burst may be configured for the UE. SSs #0, #1, and #2 may be the USS. SS #0 may be the default USS, or may be an SS used for phase A, and monitoring periodicity in SS #0 may be shorter than the slot length. SS #1 may be an SS used for phase B, and monitoring periodicity in SS #1 may be shorter than the slot length. SS #2 may be an SS used for phase C, and monitoring periodicity in SS #2 may be equal to the slot length.

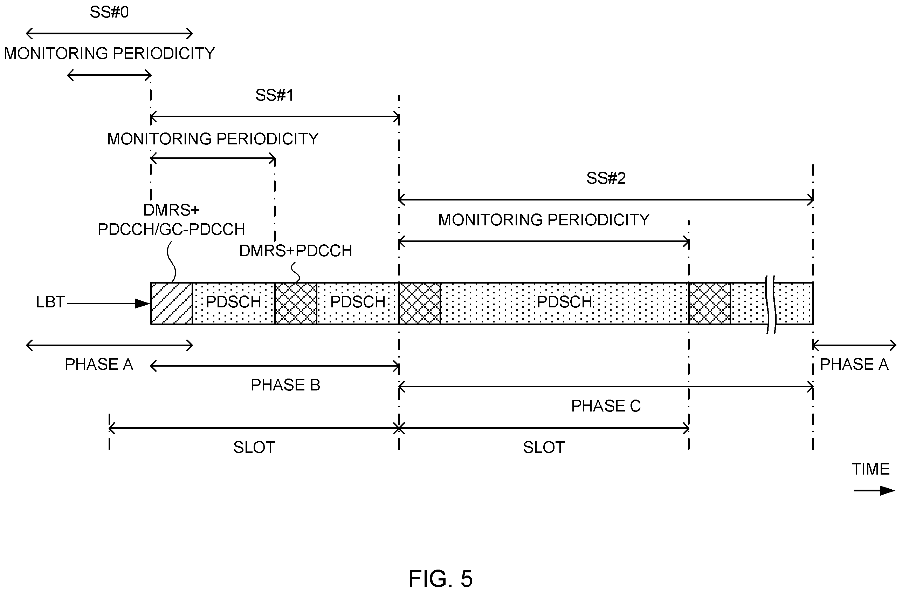

FIG. 5 is a diagram to show an example of PDCCH monitoring that uses the three SS configurations.

In phase A, the UE may monitor SS #0, and need not monitor SSs #1 and #2.

Whether the UE monitors the specific PDCCH on the basis of SS #0 may depend on UE implementation. The UE may monitor only a DMRS on the basis of SS #0, and need not monitor the specific PDCCH on the basis of SS #0.

In phase B, the UE may monitor SS #1, and need not monitor SSs #0 and #2.

The PDCCH monitoring periodicity in SS #1 may differ from the PDCCH monitoring periodicity in SS #0. The PDCCH monitoring periodicity in SS #1 may be longer than the PDCCH monitoring periodicity in SS #0. For example, the PDCCH monitoring periodicity in SS #0 may be 2 symbols, and the PDCCH monitoring periodicity in SS #1 may be 4 symbols.

In phase C, the UE may monitor SS #2, and need not monitor SSs #0 and #1.

The SS configuration for monitoring in at least one of phases A and B may be referred to as a first SS configuration. The SS configuration for monitoring in phase C may be referred to as a second SS configuration.

The SS configuration for phases A and B and SS configuration for phase C may be separately configured for the UE, or the SS configuration for phase A, SS configuration for phase B, and SS configuration for phase C may be separately configured for the UE. These SS configurations may be distinguished by different RRC information elements (IEs), or may be distinguished by different field names.

The UE may determine, depending on whether detection of the specific PDCCH is successful, an SS configuration to be monitored. For example, when detecting the specific PDCCH, the UE may switch the SS configuration for phases A and B or SS configuration for phase B to the SS configuration for phase C. In other words, the UE may be implicitly indicated switching of the SS configuration by the specific PDCCH.

The UE may switch the SS configuration on the basis of an indication to switch the SS configuration included in DCI in the specific PDCCH. For example, when detecting the indication to switch, the UE may switch the SS configuration for phases A and B or SS configuration for phase B to the SS configuration for phase C. In other words, the UE may be explicitly indicated switching of the SS configuration by the specific PDCCH.

According to this first embodiment, the PDCCH monitoring periodicity until detection of the specific PDCCH is shorter than the PDCCH monitoring periodicity after the detection of the specific PDCCH, and thus a delay from success in LBT until a start of the transmission burst in the base station can be suppressed, and utilization efficiency of frequency can be enhanced. The UE increases the PDCCH monitoring periodicity after the detection of the specific PDCCH, and thus power consumption can be suppressed.

### <Second Embodiment>

A UE may monitor a GC-PDCCH in NR-U frequency.

The GC-PDCCH may be used for notification of a transmission burst configuration in the NR-U frequency. For example, the GC-PDCCH may notify a slot format by using a specific DCI format (e.g., DCI format 2 0). The UE may acknowledge a length (duration) of DL transmission on the basis of the slot format.

The UE may perform GC-PDCCH monitoring in accordance with either of the following GC-PDCCH monitoring 1 or 2.

### <<GC-PDCCH Monitoring 1>>

Whether the GC-PDCCH is transmitted in the NR-U frequency may be configured for the UE by higher layer signaling.

When an SS configuration for the GC-PDCCH is configured for the UE, the UE may monitor the GC-PDCCH on the basis of the configured SS configuration. The SS configuration for the GC-PDCCH may be an SS configuration dedicated to the GC-PDCCH or an SS configuration including a specific DCI format (e.g., DCI format 2_0, a new DCI format for notification to UE group, or a new DCI format for the NR-U frequency). The UE may acknowledge a transmission burst configuration from a serving base station on the basis of a result of detection of the GC-PDCCH. The result of the detection of the GC-PDCCH may be whether the GC-PDCCH has been detected, or may be notified contents of the detected GC-PDCCH (specific DCI format).

When the SS configuration for the GC-PDCCH is not configured for the UE, the UE may acknowledge whether transmission from the serving base station is present on the basis of a result of detection of specific DL transmission. The specific DL transmission may be at least one of a PDCCH, a DMRS, and a specific reference signal (RS, for example, a CSI-RS). For example, when the SS configuration for the GC-PDCCH is not configured for the UE and the UE detects the specific DL transmission, the UE may acknowledge that transmission from the serving base station is present. For example, when the SS configuration for the GC-PDCCH is not configured for the UE and the UE does not detect the specific DL transmission, the UE may acknowledge that transmission from the serving base station is absent.

### <<GC-PDCCH Monitoring 2>>

GC-PDCCH monitoring in the NR-U frequency may always be configured for the UE.

The SS configuration for the GC-PDCCH may always be configured for the UE with respect to a BWP with the NR-U frequency, and the UE may monitor the GC-PDCCH on the basis of the SS configuration. The UE may acknowledge a transmission burst configuration from the serving base station on the basis of a result of detection of the GC-PDCCH. The result of the detection of the GC-PDCCH may be whether the GC-PDCCH has been detected, or may be notified contents of the detected GC-PDCCH (specific DCI format).

According to this second embodiment, the UE that uses the NR-U frequency can reliably receive the GC-PDCCH at a start of the transmission burst. The UE can acknowledge a configuration of the transmission burst.

### <Third Embodiment>

A first CORESET associated with a first SS configuration to be monitored before detection of a specific PDCCH and a second CORESET associated with a second SS configuration to be monitored after the detection of the specific PDCCH may be configured for a UE. When a bandwidth of a BWP in NR-U frequency is wider than an LBT sub-band width, different rules may be defined for the first CORESET and second CORESET.

Similarly to the first embodiment, the first SS configuration may be used for monitoring in at least one of phases A and B. The second SS configuration may be used for monitoring in phase C.

A first SS configuration for monitoring before detection of the specific PDCCH, a first CORESET associated with the first SS configuration, a second SS configuration for monitoring after the detection of the specific PDCCH, and a second CORESET associated with the second SS configuration may be configured for the UE.

A plurality of CORESETs may be associated with one SS configuration.

The above-mentioned option 3 (second method of downlink transmission) may be employed. A base station may perform LBT in each of a plurality of LBT sub-bands included in the BWP before transmission of a transmission burst, and may transmit the transmission burst by using at least one of LBT sub-bands with successful LBT. The base station may transmit the transmission burst by using all of LBT sub-bands with successful LBT, or may transmit the transmission burst by using a preconfigured LBT sub-band out of LBT sub-bands with successful LBT.

When monitoring the first SS configuration, the UE does not acknowledge which LBT sub-band a serving base station can perform transmission in, and thus the UE may perform blind detection of a PDCCH candidate for each LBT sub-band.

A plurality of first CORESETs each mapped to a plurality of different LBT sub-bands in the BWP may be associated with the first SS configuration.

At least one first CORESET mapped across a plurality of different LBT sub-bands in the BWP may be associated with the first SS configuration. In this case, the UE may assume that the PDCCH candidate and DMRS are mapped into a corresponding LBT sub-band. In other words, the UE need not assume that the PDCCH candidate and DMRS are mapped across the plurality of the LBT sub-bands.

When the UE monitors the second SS configuration, which LBT sub-band the serving base station can perform transmission in has already been decided, and thus the base station may notify information regarding an LBT sub-band to be used for transmission. For example, the specific PDCCH may notify the UE of a configuration of the LBT sub-band.

A plurality of second CORESETs each mapped to a plurality of different LBT sub-bands in the BWP may be associated with the second SS configuration.

The UE may perform PDCCH monitoring by using the second CORESET mapped to an LBT sub-band based on the detected specific PDCCH and the second SS configuration. For example, the LBT sub-band based on the detected specific PDCCH may be an LBT sub-band with the detected specific PDCCH, or may be an LBT sub-band notified by the detected specific PDCCH.

At least one second CORESET mapped across a plurality of different LBT sub-bands in the BWP may be associated with the second SS configuration. In this case, the UE may assume that the PDCCH candidate and DMRS are mapped across at least one LBT sub-band. In other words, the PDCCH candidate and DMRS need not be mapped into one LBT sub-band. When the PDCCH and DMRS in the second SS configuration are mapped across a plurality of LBT sub-bands, wide-band mapping can be done as compared to the first SS configuration, and thus frequency diversity effect and precision of channel estimation can be enhanced.

In order to switch the first SS configuration to the second SS configuration, the specific PDCCH may notify the UE of the second CORESET corresponding to an LBT sub-band with successful LBT out of the second CORESETs associated with the second SS configuration. The UE may perform PDCCH monitoring by using the notified second CORESET and second SS configuration.

According to this third embodiment, it is possible to receive, in the NR-U frequency, DL transmission in a band wider than the LBT sub-band.

### <Fourth Embodiment>

In a UE corresponding to NR-U frequency, at least one of dynamically switching (changing) an SS configuration to be monitored (the first embodiment) and GC-PDCCH monitoring (the second embodiment) may be a mandatory function.

In the UE corresponding to the NR-U frequency, both dynamically switching the SS configuration to be monitored and GC-PDCCH monitoring may be a mandatory function.

In the UE corresponding to the NR-U frequency, GC-PDCCH monitoring may be a mandatory function. Dynamically switching the SS configuration to be monitored may be an optional function. The UE may report, as a UE capability, support for dynamic switch in the SS configuration to be monitored.

According to this fourth embodiment, the UE can reliably perform, in the NR-U frequency, at least one of dynamic switch in the SS configuration to be monitored and GC-PDCCH monitoring.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

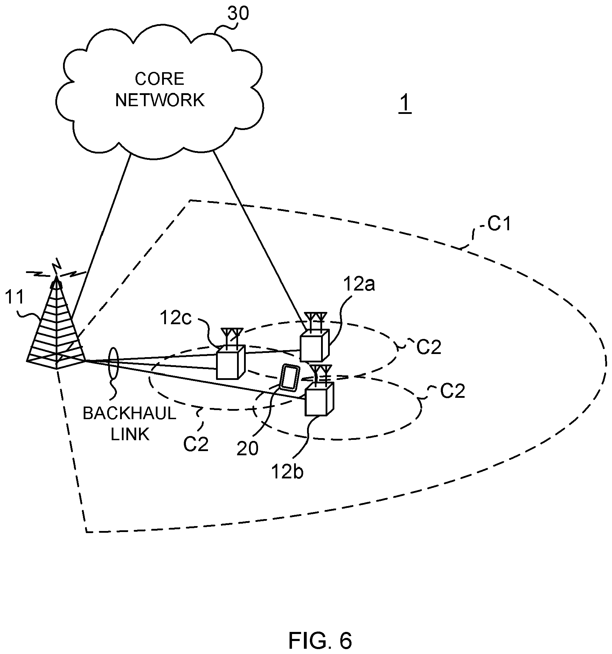

FIG. 6 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

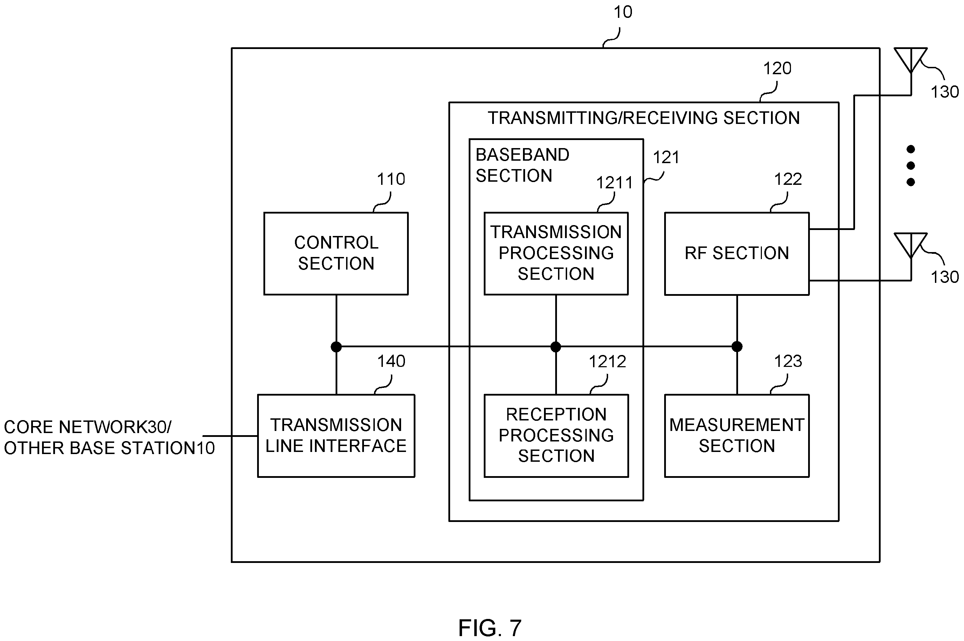

FIG. 7 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120 and the transmitting/receiving antennas 130.

### (User Terminal)

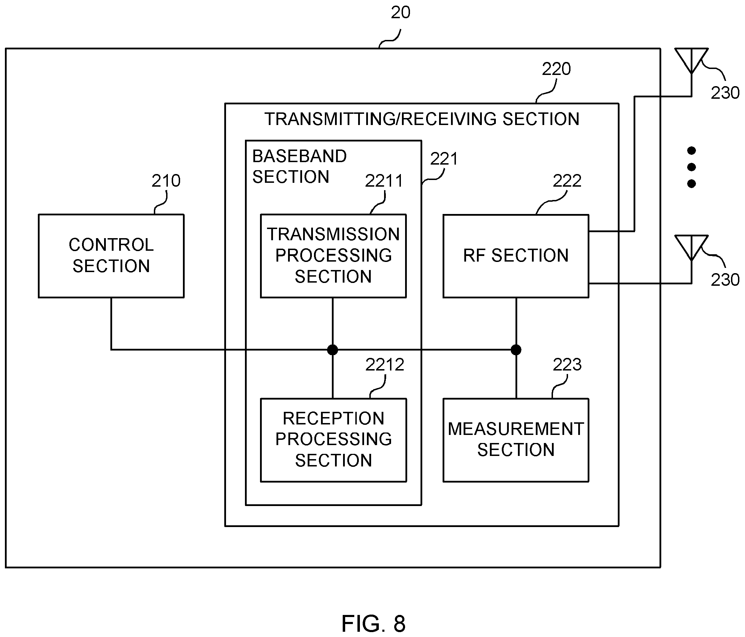

FIG. 8 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220, the transmitting/receiving antennas 230, and the communication path interface 240.

The transmitting/receiving section 220 may monitor a first downlink control channel on the basis of a search space (SS) configuration for a frequency band in which channel sensing is applied. The control section 210 may change the search space configuration on the basis of a result of detection of the first downlink control channel.

The control section 210 may use a first search space configuration for monitoring the first downlink control channel, and may use a second search space configuration for monitoring a second downlink control channel after the detection of the first downlink control channel. Monitoring periodicity in the second search space configuration may be longer than monitoring periodicity in the first search space configuration.

Sensing may be performed in each of a plurality of sub-bands in a bandwidth part (BWP) including a band for the first downlink control channel. At least one first control resource set (CORESET) associated with the first search space configuration may be mapped to the plurality of the sub-bands. At least one second CORESET associated with the second search space configuration may be mapped to a sub-band based on the first downlink control channel out of the plurality of the sub-bands.

The first downlink control channel may be a group common downlink control channel (e.g., a GC-PDCCH).

The control section 210 may have a mandatory function for at least one of monitoring a group common downlink control channel and changing the search space configuration on the basis of the result of the detection.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

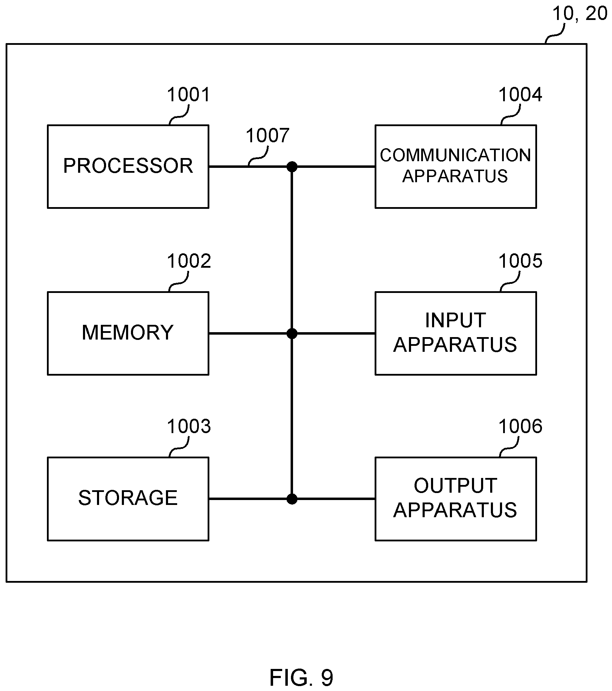

For example, a base station, a user terminal, and so on according to one embodiment of the present disclosure may function as a computer that executes the processes of the radio communication method of the present disclosure. FIG. 9 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A user terminal comprising:
a receiving section that monitors a first downlink control channel on the basis of a search space configuration for a frequency band in which channel sensing is applied; and
a control section that changes the search space configuration on the basis of a result of detection of the first downlink control channel.

2. The user terminal according to claim 1, wherein
the control section uses a first search space configuration for monitoring the first downlink control channel, and uses a second search space configuration for monitoring a second downlink control channel after the detection of the first downlink control channel, and
monitoring periodicity in the second search space configuration is longer than monitoring periodicity in the first search space configuration.

3. The user terminal according to claim 2, wherein
sensing is performed in each of a plurality of sub-bands in a bandwidth part (BWP) including a band for the first downlink control channel,
at least one first control resource set (CORESET) associated with the first search space configuration is mapped to the plurality of the sub-bands, and
at least one second CORESET associated with the second search space configuration is mapped to a sub-band based on the first downlink control channel out of the plurality of the sub-bands.

4. The user terminal according to any one of claims 1 to 3, wherein the first downlink control channel is a group common downlink control channel.

5. The user terminal according to any one of claims 1 to 4, wherein the control section has a mandatory function for at least one of monitoring a group common downlink control channel and changing the search space configuration on the basis of the result of the detection.

6. A radio communication method for a user terminal, the radio communication method comprising:
monitoring a first downlink control channel on the basis of a search space configuration for a frequency band in which channel sensing is applied; and
changing the search space configuration on the basis of a result of detection of the first downlink control channel.
